# EUROPEAN PATENT SPECIFICATION

(11) **EP 4 154 578 B1**
(45) Date of publication and mention of the grant of the patent: **15.10.2025**
(21) Application number: 21808775.7
(22) Date of filing: 12.04.2021
(51) Int. Cl.: H04W 24/10, H04W 36/00, H04W 52/38, H04B 1/3827, H04W 52/18, H04W 52/40, H04W 36/16, H04W 52/14, H04W 52/36

(54) **EXCHANGE OF MAXIMUM PERMISSIBLE EXPOSURE RELATED INFORMATION DURING HANDOVER**
AUSTAUSCH VON INFORMATIONEN IM ZUSAMMENHANG MIT MAXIMAL ZULÄSSIGEN EXPOSITIONEN WÄHREND DER ÜBERGABE
ÉCHANGE D'INFORMATIONS RELATIVES À UNE EXPOSITION MAXIMALE AUTORISÉE PENDANT UN TRANSFERT INTERCELLULAIRE

(30) Priority: 20.05.2020 US 202063027695 P
(43) Date of publication of application: 29.03.2023
(73) Proprietor: Nokia Technologies Oy, 02610 Espoo (FI)
(72) Inventor: CAPORAL DEL BARRIO, Samantha, 9000 Aalborg (DK); AWADA, Ahmad, 81249 Munich (DE); ROM, Christian, 9000 Aalborg (DK); SVENDSEN, Simon, 9000 Aalborg (DK); VIERING, Ingo, 81549 Munich (DE)
(74) Representative: Mudge, Kevin
(86) International application number: PCT/FI2021/050263
(87) International publication number: WO 2021/234213

(56) References cited:
- EP-A1- 2 451 214
- WO-A1-2020/089791
- US-A1- 2014 370 929
- US-A1- 2016 165 490
- US-A1- 2019 261 289
- US-A1- 2020 145 927

## Description

### FIELD:

Some example embodiments may generally relate to mobile or wireless telecommunication systems, such as Long Term Evolution (LTE) or fifth generation (5G) radio access technology or new radio (NR) access technology, or other communications systems. For example, certain example embodiments may relate to apparatuses, systems, and/or methods for exchanging maximum permissible exposure related information during handover.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. Fifth generation (5G) wireless systems refer to the next generation (NG) of radio systems and network architecture. 5G is mostly built on a new radio (NR), but the 5G (or NG) network can also build on E-UTRAN radio. It is estimated that NR will provide bitrates on the order of 10-20 Gbit/s or higher, and will support at least enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. It is noted that, in 5G, the nodes that can provide radio access functionality to a user equipment (i.e., similar to Node B in UTRAN or eNB in LTE) are named gNB when built on NR radio and named NG-eNB when built onE-UTRAN radio.

Patent publication WO2020089791A1 relates to methods and apparatuses for limited uplink. Patent publication US20160165490A1 relates to a user terminal and base station.

### SUMMARY:

The invention is defined by the independent claims.

### BRIEF DESCRIPTION OF THE DRAWINGS:

For proper understanding of example embodiments, reference should be made to the accompanying drawings, wherein:
FIG. 1 illustrates an example of an uplink (UL) transmission scenario.
FIG. 2 illustrates an example of a maximum allowed effective isotropically radiated power (EIRP) to comply with maximum permissible exposure (MPE), depending on an antenna-user distance.
FIG. 3 illustrates an example UL budget under MPE.
FIG. 4 illustrates admission control scenarios, according to certain example embodiments.
FIG. 5 illustrates a signal flow diagram, according to certain example embodiments.
FIG. 6 illustrates a flow diagram of a method, according to an example embodiment.
FIG. 7 illustrates a flow diagram of another method, according to an example embodiment.
FIG. 8(a) illustrates an apparatus, according to an example embodiment.
FIG. 8(b) illustrates another apparatus, according to an example embodiment.

### DETAILED DESCRIPTION:

It will be readily understood that the components of certain example embodiments, as generally described and illustrated in the figures herein, may be arranged and designed in a wide variety of different configurations. The following is a detailed description of some example embodiments of systems, methods, apparatuses, and computer program products for exchanging maximum permissible exposure related information over an Xn interface during handover (HO).

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments.

Additionally, if desired, the different functions or procedures discussed below may be performed in a different order and/or concurrently with each other. Furthermore, if desired, one or more of the described functions or procedures may be optional or may be combined. As such, the following description should be considered as merely illustrative of the principles and teachings of certain example embodiments, and not in limitation thereof.

Due to an increase of online services, bandwidth demand has become insatiable. The millimeter-wave (mmW) spectrum (e.g., Frequency Range 2 (FR2)) between 24 GHz and 52 GHz, and beyond offers the possibility of using large portions of contiguous bandwidth to address high-throughput applications. To compensate for the increased path loss at the mmW, 5G antennas may provide a gain of at least about 10 dB at the user equipment (UE), and at least about 20 dB at the base station (BS). However, operating at high frequencies with high gain antennas may raise concerns for the health of the users. Thus, governmental exposure guidelines have been created to regulate the maximum allowed transmit power on the UE. Since frequencies below 100 GHz are non-ionizing, the concern for health relates to thermal heating of the body tissue while absorbing electromagnetic mmW energy.

One governmental regulation relates to maximum permissible exposure (MPE), which is a regulation on power density (PD). In particular, the Federal Communications Commission (FCC) has set the threshold for MPE at 10 W/m² (1 mW/cm²), for the general public, to between 6 to 100 GHz. In addition, the Internal Commission on Non-Ionizing Radiation Protection (ICNIRP) has set the threshold for MPE at 10 W/m² (1 mW/cm²), for the general public, to 10 to 100 GHz. Further, the energy absorbed by the human body may increase as the distance to the UE decreases. Thus, to comply with the MPE limit, the UE may have to reduce its output power if the user gets in close vicinity of the antenna. With 5G, such power back-off may be dramatically high and, thus, may lead to a radio link failure (RLF). The consequences of a large power back-off in a FR2 directive link may be significantly more severe than in legacy spectrum (i.e., FR1).

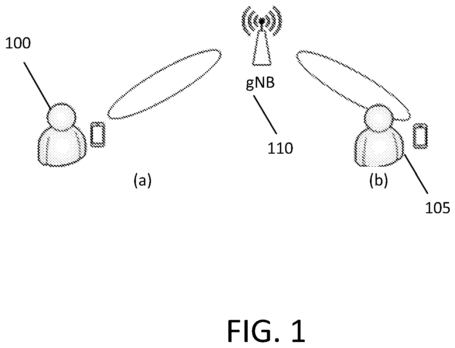

**FIG.** 1 illustrates an example of an uplink (UL) transmission scenario. In particular, FIG. 1 illustrates (a) case 1 and (b) case 2. In case 1, there may be an unobstructed line of sight (LOS) path from the UE 100 to the gNB 110. However, in case 2, the human body stands on the path of the beam from the UE 105. As such, in case 1, the effective isotropically radiated power (EIRP) may be maximized. In contrast, according to case 2, the user of the UE 105 may be exposed to the radiated beam and, thus, as the distance to the user's body decreases, the output power of the UE 105 may need to be reduced to a safe level to comply with MPE.

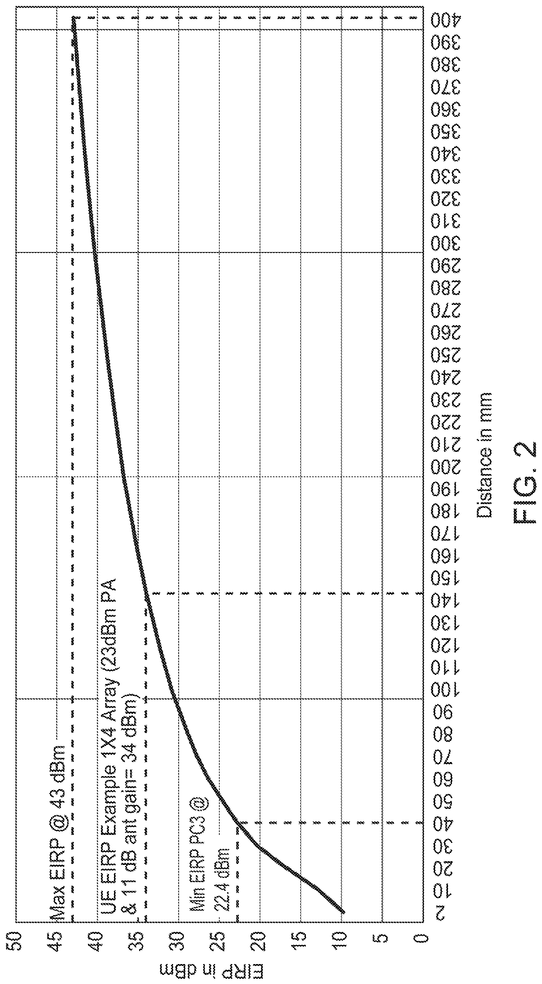

FIG. 2 illustrates an example of a maximum allowed effective isotropically radiated power (EIRP) to comply with maximum permissible exposure (MPE), depending on an antenna-user distance. In particular, FIG. 2 illustrates the maximum allowed EIRP (PA power and array gain) depending on the distance separating the radiating antenna and the user. As illustrated in FIG. 2, for a Power Class 3 UE (PC3 UE), from 14 cm onwards (for a 2x2 array; a larger array may require the UE to reduce its power before 14 cm), the UE needs to reduce its output power to comply with MPE. Moreover, the allowed peak EIRP drops to 8 dBm at 2 mm on a 100% duty cycle. Thus, up to a 26 dB drop (for a 2x2 array; a larger array may require a larger drop) can be observed in the transmitted power from the UE in presence of the user nearly touching the antenna. In addition, the UL may be critically affected by the allowed output power level. Though a trade-off may be found between the transit power and the duty cycle, if the user is sufficiently close to the antenna, the UE may be required to reduce its output power as well as set a restriction on the duty cycle. The lowest duty cycle of 15% may account for 6 dB of the back-off power.

As noted above, 5G new radio (NR) may operate at high frequencies. As such, 5G NR may use high gain antennas to maintain a good signal. However, high gain antennas direct an increased amount of energy that might come towards the user, whom the FCC seeks to protect by setting an MPE threshold. To comply with the MPE, the UE may subsequently dramatically and unpredictably reduce its output power if the user comes in close vicinity of the UE.

In other scenarios, the UE default implementation when an MPE event is detected may be to limit the UL transmissions to the maximum allowed EIRP. According to certain example embodiments, an MPE event may correspond to a situation when the UE is required to adjust its output power to satisfy an MPE UL restriction. That is, the MPE event may be an event that is based on user detection, which limits the output power of the antenna array on the UE to a value below what the UE would otherwise use if there was no user. If the UE has a proximity sensor that can accurately detect the user distance, then the UE may apply a dynamic back-off. Otherwise, the UE may simply apply the maximum power back-off on the UL transmission slots as soon as it detects a user in the vicinity of the antenna. Since this is a strict FCC requirement, the UE needs to be 100% sure not to violate it. Further, the averaging window for MPE compliance may be a running window, and may also be set by FCC regulation.

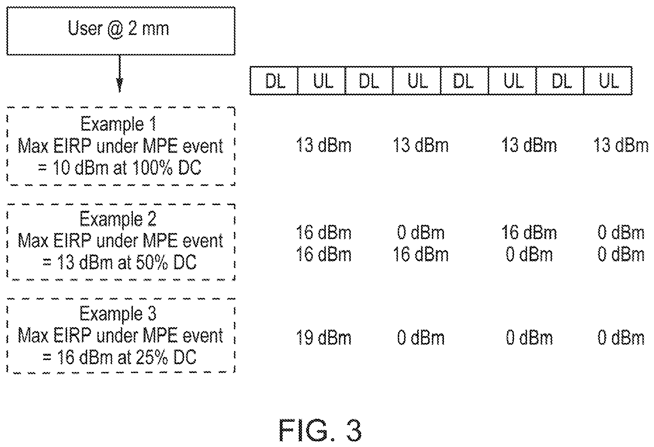

FIG. 3 illustrates an example UL budget under MPE. In particular, FIG. 3 illustrates how the gNB can adapt or adjust the UL scheduling to minimize the impact of MPE, if informed of the MPE event and of the current power back-off. In 5G (mmW spectrum and directive links, i.e., FR2 and beyond), excessively reducing the output power may lead to losing the connection to the base station (gNB). Since this scenario already occurs when the user is located at about 14 cm from the UE (and even further for larger than 2x2 arrays), RLFs due to MPE may occur frequently and unpredictably.

**In** certain cases, there may be various MPE scenarios. For example, these scenarios may include the UE being able to detect MPE on target cells, and the UE being able to report MPE events and associated power back-off to the source cell. At this point, the source cell may decide whether initiate the HO to the target, solely based on the reported UE MPE event. However, this is just part of the information that is used at the source cell to make the best HO decision.

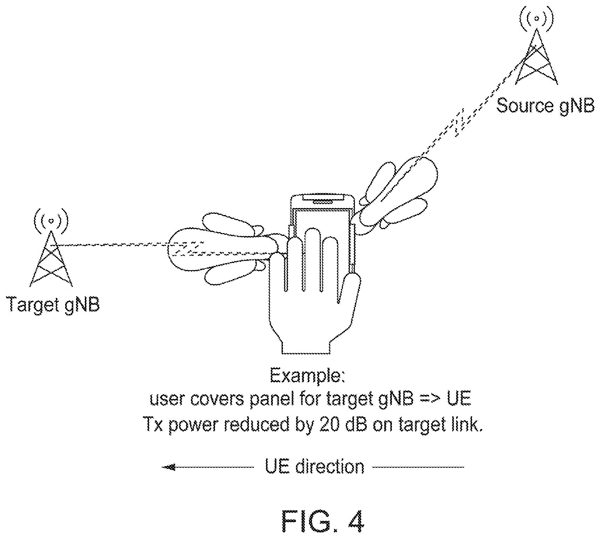

FIG. 4 illustrates admission control scenarios, according to certain example embodiments. In general, the admission control of the target cell is not aware whether the UE is experiencing an MPE event or not. Without this information, the decision on whether to admit a protocol data unit (PDU) session that is being handed over or the entire HO may be sub-optimal as the target cell is not aware of the potential degradation in UL, and its impact on the radio link. Moreover, the target cell may miss the opportunity to react proactively on MPE events experienced by the UE, by tailoring for instance, the configuration of initial access parameters and/or data scheduling configuration in the HO command, which can lead to throughput degradation or even HO failure in some cases.

As illustrated in FIG. 4, certain example embodiments may address the issue of a situation where the source cell may decide to initiate HO to the target cell, and the target cell may not be able to decode random access channel (RACH) procedure, and the HO fails. Failure may be due to a situation where UL power is too limited due to severe MPE, and/or because interference at the target cell requires power ramping, which cannot be fulfilled by the UE because of MPE. In addition, another issue addressed by certain example embodiments may include a situation where the source cell may decide to initiate HO to the target cell, and the HO may succeed but with an un-optimized data rate and waste resources. In such a case, the UE may then signal the MPE event to the target cell, and then the UL scheduling may be reconfigured. This may be a sub-optimal mechanism when the source cell already knew the UE MPE situation.

Other example embodiments may address the issue of lack of MPE related information exchange between the source gNB and the target gNB regarding a UE experiencing an MPE event to enable successful HO. In particular, in certain example embodiments the target gNB may not have the relevant information to make a decision on whether it 1) should accept or reject the HO or some of the handed over PDU session, or 2) tailor the HO command the initial access and data scheduling configuration of physical uplink shared channel (PUSCH) for the UE with the MPE event. This may lead to HO failures, and to sub-optimum throughput and waste of resources. Although it may be possible to send an emergency MPE message from the serving panel to the serving gNB, and adding UL power back-off from non-serving panels per neighbor cell measurement reported to the serving cell, this just enables the serving gNB to decide to send (or not send) the HO request. Such approaches, however, do not enable the target cell to take the correct action regarding the HO of a UE experiencing an MPE event.

Certain example embodiments provide a means whereby the source gNB indicates to the target gNB the MPE status related information at the UE during HO. Using this information, the target gNB performs better admission control decisions for the UE by accepting or rejecting HO (or some of the PDU sessions listed in the HO request). The gNB may also adapt proactively by providing tailored physical random access channel (PRACH) configuration and/or UL data scheduling in the HO command. In certain example embodiments, these performances by the target gNB are achieved by adding MPE information into the HO request message, which is sent from the source gNB to the target gNB over an Xn interface. In particular, according to certain example embodiments, the MPE information may include an indication that the UE will operate the target link under MPE UL restriction(s). The MPE information may also include the required UL back-off on the target link, which enables the target cell to optimize UL scheduling for the UE.

According to certain example embodiments, the new information on MPE events from the source gNB may help the target gNB adapt the UL data scheduling in PUSCH to maximize UL transmitted power while not violating MPE regulation. For example, by scheduling less UL slots, the target may enable the UE to transmit on each slot with higher power. In addition, the target may use the new MPE information added to the HO request to configure dedicated RACH parameters that would ensure a successful access to the cell.

In certain example embodiments, by using the MPE information, the target gNB may reject the HO request if it can predict, with the received MPE information, that PUSCH transmissions would not be successfully decoded. For example, if the MPE event requires a back-off of, for example, 10 dBm on UL compared to DL RSRP value of -90 dBm, and the target knows that it requires at least a link budget of -85 dBm (the target may know that from other UEs served by the same beam or interference level, or other indicators) to decode the UL, then the target may infer that the UE will provide an UL of -100 dBm. This would be below the target requirement of -85 dBm that it cannot decode PUSCH, and should therefore reject the HO request. In certain example embodiments, the target gNB may have the necessary information such as target cell power control parameters, scheduling information, or quality of service (QoS) parameters (received from the source cell using the HO request) to estimate whether the power back-off (PBO) (received from the source cell) would actually impact at all the PUSCH transmission for the dedicated radio bearers (DRBs) carrying the QoS flows of a PDU session. The PBO may have an impact if the UE UL power transmission exceeds Pmax - PBO, where Pmax is the maximum allowed transmission power for the UE. If the UE UL power transmission exceeds Pmax - PBO, then the UE may be limited to use Pmax - PBO as the UL transmission power. As such, the target gNB may estimate the degradation in UL power transmission on PUSCH, and may decide on whether it can still meet the QoS parameters of the flows carried out by the DRB of a PDU session.

According to other example embodiments, the target gNB may send a HO Preparation Failure message to the source gNB. Alternatively, using the MPE information, the target gNB may reject a subset of PDU sessions that are being handed over instead of rejecting the entire HO request. For instance, the target gNB may send an HO Request Acknowledge message to the source gNB. For both cases, the target gNB may include in the HO Handover Preparation Failure or Handover Request Acknowledge, a new cause/field (e.g., MPE related rejection), for indicating to the source cell the rejection of the HO or some of the PDU sessions, respectively, due to MPE event reasons. Thus, according to certain example embodiments, the target cell may have the ability to handle and execute improved HO decisions. This may be accomplished, for example, by adding MPE related information for the UE to be handed over into the Handover Request message. The target's improvements may also be achieved by adding the HO Handover Preparation Failure or Handover Request Acknowledge message, a new cause/field (e.g., MPE related rejection), in case the target cell decides based on the received MPE related information, to reject the HO or some of the PDU sessions, respectively.

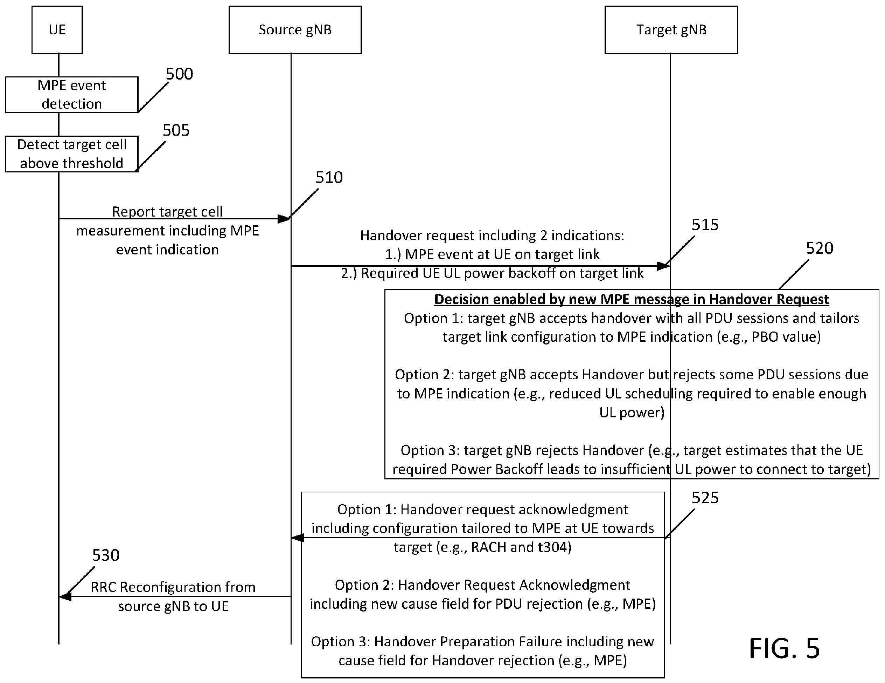

FIG. 5 illustrates a signal flow diagram, according to certain example embodiments. In particular, FIG. 5 illustrates signaling of the MPE event in the HO request from the source gNB to the target gNB. FIG. 5 also illustrates a response with a new cause/field in the HO request acknowledgment. With these features, the target is able to have a full picture of the MPE situation at the UE before accepting or rejecting the HO. Moreover, if the target accepts the HO, it may be able to pre-emptively schedule for best UE Tx power allocation.

**In** FIG. 5, at 500, an MPE event 500 is detected at the UE. For instance, in certain example embodiments, the MPE event may be detected with proximity sensors (e.g., capacitive sensors, radars embedded in the array, etc.). in addition, the UE may use the sensors to detect an object/user, its distance to the antenna array, its movement, and its direction. As previously noted, the MPE event may be based on user detection. In addition, the MPE event may be detected when the output power of the antenna array on the UE is limited to a value below what the UE would otherwise use if there was no user. At 505, the UE may detect that the target cell measurement (signal strength or signal quality) is offset better than that of the source cell (A3 measurement event), or the source cell measurement is lower than a first threshold and the target cell measurement is above a second threshold (A5 measurement event). According to certain example embodiments, the threshold may correspond to a power level from the target cell measured at the UE. For example, this may include the reference signal received power (RSRP) from the target cell. More specifically, the threshold may correspond to a power difference between the serving link and the target link. At 510, the UE may send a cell measurement report to the source gNB, which may include the MPE event indication (e.g., power back-off). In certain example embodiments, the PBO may be between 1 and 20 dB for PC3 UEs equipped with antenna arrays of 11 dB gain (e.g., 4 efficient patches).

Further, at 515, the source gNB sends an HO request message to the target gNB. According to certain example embodiments, the HO request may be sent over an Xn interface from the source gNB to the target gNB. In certain example embodiments, the request may include two new indications. For example, a first indication includes an MPE event at the UE on a target link. That is, the new information included in the HO request may include an indication that the UE will operate the target link under MPE UL restriction(s). For example, under MPE UL restrictions, the UE may operate with a decreased amount of output power to comply with the MPE restriction than it otherwise would without the MPE restriction. According to certain example embodiments, the MPE event may be an indication that the target may be served in UL with, for example, 10 dB (10 dB here may be an example PBO, and it may be any value between 1 and 20 dB for the exampled described above) less power than RSRP indicates for this target cell at the UE. The MPE event may also provide an indication that the UE may apply a power back-off for the target cell radio link communication. Further, a second indication may include the required UE UL power back-off (e.g., up to 20 dB) on the target link.

After receiving the HO request from the source gNB, the target gNB makes a decision enabled by the new MPE message in the HO request. For example, as a first option, the target gNB may accept the HO with one or more of the PDU sessions, and tailor the target link configuration to the MPE indication (e.g., power back-off value). In particular, the target gNB accepts the HO and the PDU sessions, but sends in a Handover Request Acknowledge message, target cell configuration that is tailored for the MPE information received from the source cell. According to certain example embodiments, the PDU session IDs may be indicated by the source gNB using "PDU Session ID" in a handover request message sent to the target gNB. The admitted PDU sessions by the target gNB may also be indicated by "PDU Session ID" in the handover request acknowledge to the source gNB. As a second option, the target gNB may accept the HO, but reject some PDU sessions due to the MPE indication (e.g., reduced UL scheduling required to enable enough UL power). Further, as a third option, the target gNB may reject the entire HO where the target gNB estimates that the UE required power back-off would lead to insufficient UL power to connect to the target gNB.

According to certain example embodiments, based on the MPE related information from the source gNB, the target gNB in the first option may cope with the situation by providing the UE with a target cell configuration that does not require the UE to apply necessarily power back-off for the UL transmit power or at least limits the use of power back-off. Alternatively, the target gNB in the first option may find out that the impact of the MPE related information is not that detrimental that it requires to reject the admission of the affected PDU session. Further, if the target gNB determines that it cannot bear the impact of MPE on the QoS requirements of the handed over PDU session, then it may decide to reject the admission of the PDU session as in the second option. If all PDU sessions are rejected, then the target gNB may reject the handover as in the third option. In certain example embodiments, for deciding between the firs option and the second option, the methods described in paragraph [0030] may be used.

At 525, the target gNB may send an acknowledgment message to the source gNB. According to certain embodiments, in a first option, the acknowledgment message may include an HO Request Acknowledge including configuration tailored to the MPE at the UE towards the target gNB (e.g., RACH and T304). According to certain example embodiments, the target gNB may provide the target cell configuration that the UE may use for performing random access. In addition, the target gNB may provide dedicated RACH configuration for the UE depending on the MPE related information received from the source cell. In a second option, the acknowledgment message may include an HO Request Acknowledge including a new cause/field for PDU rejection (e.g., MPE). Further, in a third option, the acknowledgment message may include an HO Preparation Failure including a new cause/field for HO rejection (e.g., MPE). In addition, at 530, the source gNB may send an RRC reconfiguration to the UE based on the message received from the source gNB.

According to certain example embodiments, new information may be included in the HO Request signaled over the Xn interface from the source gNB to the target gNB. In certain example embodiments, the new information may include an indication that the UE will operate the target link under MPE UL restriction(s). In addition, the new information may include the required UL power back-off on the target link.

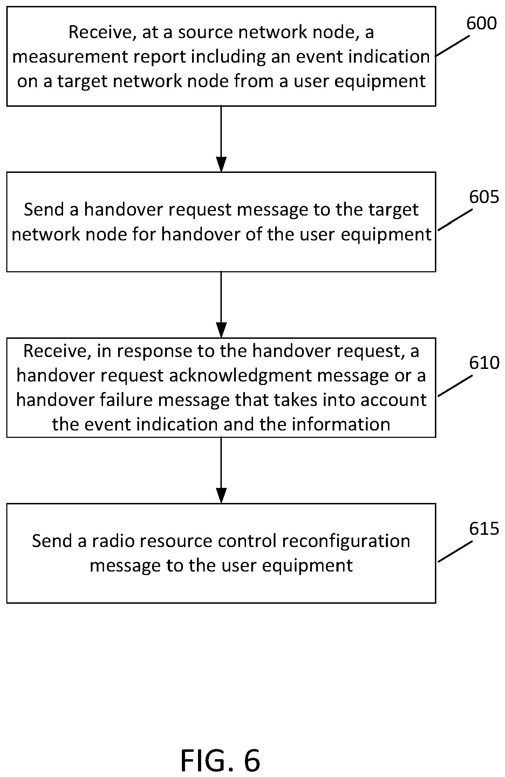

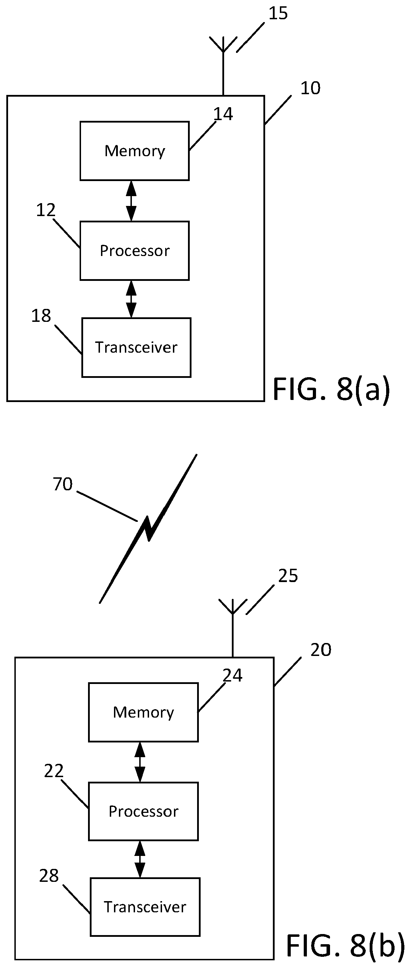

FIG. 6 illustrates a flow diagram of a method, according to an example embodiment. In certain example embodiments, the flow diagram of FIG. 6 may be performed by a telecommunications network, network entity or network node in a 3GPP system, such as LTE or 5G-NR. For instance, in an example embodiment, the method of FIG. 6 may be performed by a source base station, source eNB, or source gNB for instance similar to apparatus 20 illustrated in FIG. 8(b), which may be in communication with a mobile station and/or UE, for instance similar to apparatus 10 illustrated in FIG. 8(a).

According to certain example embodiments, the method of FIG. 6 may include, at 600, receiving, at a source network node, a measurement report comprising an event indication on a target network node. The method may also include, at 605, sending a handover request message to the target network node for handover of a user equipment. According to certain example embodiments, the handover request message may include information including the event indication, or a user equipment operation restriction or an uplink power adjust indication related to the user equipment. The method may further include, at 610, receiving, in response to the handover request, a handover request acknowledgment message or a handover failure message that takes into account the event indication and the information. In addition, the method may include at 615, sending a radio resource control reconfiguration message to the user equipment. In certain example embodiments, the radio resource control reconfiguration message may include a tailored radio access channel configuration based on a content the handover request acknowledgment message or the handover failure message, the content being related to the event indication and the uplink power adjustment.

According to certain example embodiments, the user equipment operation restriction may be an indication of a maximum permissible exposure event during which the user equipment is required to adjust its output power to satisfy a maximum permissible exposure uplink restriction. According to other example embodiments, the power adjust indication may be an indication that the user equipment will operate a target link of the target network node under the maximum permissible exposure uplink restriction. In certain example embodiments, the handover request acknowledgment message may include a configuration of the target network node that is tailored for the event indication. In other example embodiments, the handover request acknowledgement message may include a cause field indicating a rejection of one or more protocol data unit sessions. According to certain example embodiments, the handover failure message may include a cause field indicating a rejection of the entire handover.

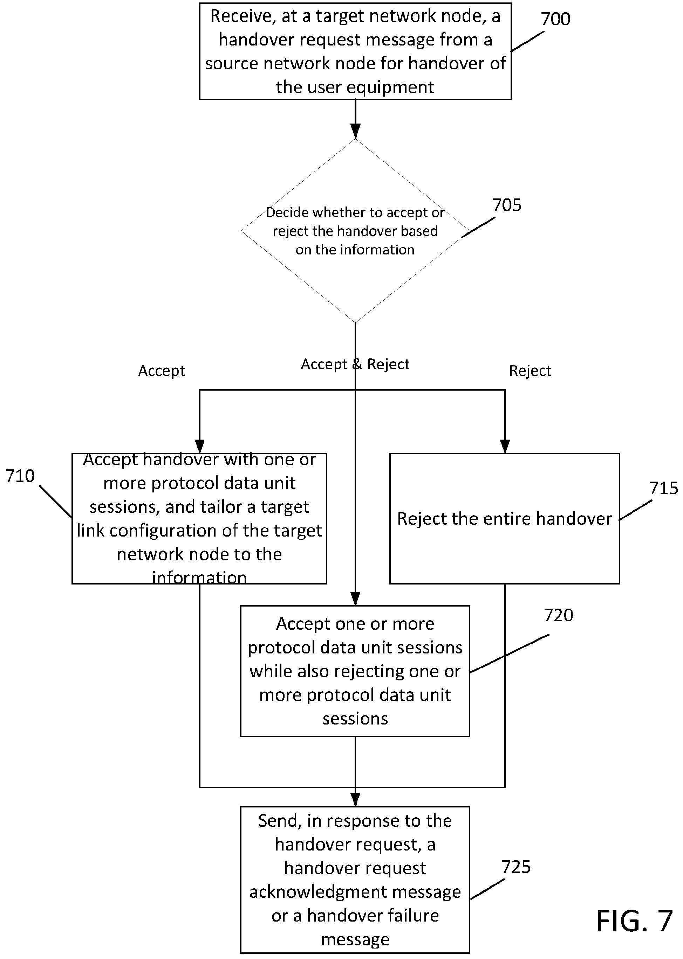

FIG. 7 illustrates a flow diagram of another method, according to an example embodiment. In an example embodiment, the method of FIG. 7 may be performed by a telecommunications network, network entity or network node in a 3GPP system, such as LTE or 5G-NR. For instance, in an example embodiment, the method of FIG. 7 may be performed by a target base station, target eNB, or target gNB for instance similar to apparatus 20 illustrated in FIG. 8(b).

According to an example embodiment, the method of FIG. 7 may include, at 700, receiving, at a target network node, a handover request message from a source network node for handover of a user equipment. According to certain example embodiments, the handover request message may include information including an event indication, or a user equipment operation restriction or an uplink power adjustment indication related to the user equipment. The method may also include, at 705, deciding whether to accept or reject the handover based on the information. The method may further include, at 710, accepting the handover with one or more protocol data unit sessions, and tailoring a target link configuration of the target network node to the information. In addition, at 715, the method may include rejecting the entire handover. Further, at 720, the method may include accepting one or more protocol data unit sessions while also rejecting one or more protocol data unit sessions. The method may further include, at 725, sending, in response to the handover request, a handover request acknowledgment message or a handover failure message.

According to certain example embodiments, the method may further include adjusting uplink data scheduling in a communication channel between the target network node and the user equipment based on the information. According to other example embodiments, the method may include configuring a dedicated radio access channel parameter based on the information. In certain example embodiments, the information corresponds to maximum permissible exposure information of the user equipment. In certain example embodiments, the decision to reject the handover may be made when a required power back-off of the user equipment results in insufficient uplink power to connect to the target network node. According to certain example embodiments, the required power back-off may be given in the uplink power adjustment. In other example embodiments, the handover request acknowledgment message may include a configuration of the target cell that is tailored for an event indication. According to certain example embodiments, the handover request acknowledgement message may include a cause field indicating a rejection of one or more protocol data unit sessions. According to other example embodiments, the handover failure message may include a cause field indicating a complete rejection of the handover.

FIG. 8(a) illustrates an apparatus 10 according to an example embodiment. In an embodiment, apparatus 10 may be a node or element in a communications network or associated with such a network, such as a UE, mobile equipment (ME), mobile station, mobile device, stationary device, IoT device, or other device. As described herein, UE may alternatively be referred to as, for example, a mobile station, mobile equipment, mobile unit, mobile device, user device, subscriber station, wireless terminal, tablet, smart phone, IoT device, sensor or NB-IoT device, or the like. As one example, apparatus 10 may be implemented in, for instance, a wireless handheld device, a wireless plug-in accessory, or the like.

In some example embodiments, apparatus 10 may include one or more processors, one or more computer-readable storage medium (for example, memory, storage, or the like), one or more radio access components (for example, a modem, a transceiver, or the like), and/or a user interface. In some embodiments, apparatus 10 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 10 may include components or features not shown in FIG. 8(a).

As illustrated in the example of FIG. 8(a), apparatus 10 may include or be coupled to a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in FIG. 8(a), multiple processors may be utilized according to other embodiments. For example, it should be understood that, in certain example embodiments, apparatus 10 may include two or more processors that may form a multiprocessor system (e.g., in this case processor 12 may represent a multiprocessor) that may support multiprocessing. According to certain example embodiments, the multiprocessor system may be tightly coupled or loosely coupled (e.g., to form a computer cluster).

Processor 12 may perform functions associated with the operation of apparatus 10 including, as some examples, precoding of antenna gain/phase parameters, encoding and decoding of individual bits forming a communication message, formatting of information, and overall control of the apparatus 10, including processes illustrated in FIGs. 1-5.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

**In** an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10 to perform any of the methods illustrated in FIGs. 1-5.

In some embodiments, apparatus 10 may also include or be coupled to one or more antennas 15 for receiving a downlink signal and for transmitting via an uplink from apparatus 10. Apparatus 10 may further include a transceiver 18 configured to transmit and receive information. The transceiver 18 may also include a radio interface (e.g., a modem) coupled to the antenna 15. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device). In certain embodiments, apparatus 10 may further include a user interface, such as a graphical user interface or touchscreen.

**In** an embodiment, memory 14 stores software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software. According to an example embodiment, apparatus 10 may optionally be configured to communicate with apparatus 20 via a wireless or wired communications link 70 according to any radio access technology, such as NR.

According to certain example embodiments, processor 12 and memory 14 may be included in or may form a part of processing circuitry or control circuitry. In addition, in some embodiments, transceiver 18 may be included in or may form a part of transceiving circuitry.

As discussed above, according to certain example embodiments, apparatus 10 may be a UE for example. According to certain embodiments, apparatus 10 may be controlled by memory 14 and processor 12 to perform the functions associated with example embodiments described herein. For instance, in certain example embodiments, apparatus 10 may be controlled by memory 14 and processor 12 to detect an MPE event. Apparatus 10 may also be controlled by memory 14 and processor 12 to detect that a target cell or gNB is operating above a certain threshold. In addition, apparatus 10 may be controlled by memory 14 and processor 12 to send a measurement report including an MPE event indication to a source cell or source gNB. According to certain example embodiments, the MPE event indication may include power back-off information, such as an MPE UL power restriction of the UE.

FIG. 8(b) illustrates an apparatus 20 according to an example embodiment. In an example embodiment, the apparatus 20 may be a network element, node, host, or server in a communication network or serving such a network. For example, apparatus 20 may be a base station, a Node B, an evolved Node B (eNB), 5G Node B or access point, next generation Node B (NG-NB or gNB), and/or WLAN access point, associated with a radio access network (RAN), such as an LTE network, 5G or NR. It should be noted that one of ordinary skill in the art would understand that apparatus 20 may include components or features not shown in FIG. 8(b).

As illustrated in the example of FIG. 8(b), apparatus 20 may include a processor 22 for processing information and executing instructions or operations. Processor 22 may be any type of general or specific purpose processor. For example, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in FIG. 8(b), multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster.

According to certain example embodiments, processor 22 may perform functions associated with the operation of apparatus 20, which may include, for example, precoding of antenna gain/phase parameters, encoding and decoding of individual bits forming a communication message, formatting of information, and overall control of the apparatus 20, including processes illustrated in FIGS. 1-7.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20 to perform the methods illustrated in FIGS. 1-7.

In certain example embodiments, apparatus 20 may also include or be coupled to one or more antennas 25 for transmitting and receiving signals and/or data to and from apparatus 20. Apparatus 20 may further include or be coupled to a transceiver 28 configured to transmit and receive information. The transceiver 28 may include, for example, a plurality of radio interfaces that may be coupled to the antenna(s) 25. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink).

As such, transceiver 28 may be configured to modulate information on to a carrier waveform for transmission by the antenna(s) 25 and demodulate information received via the antenna(s) 25 for further processing by other elements of apparatus 20. In other embodiments, transceiver 18 may be capable of transmitting and receiving signals or data directly. Additionally or alternatively, in some embodiments, apparatus 20 may include an input and/or output device (I/O device).

In an embodiment, memory 24 may store software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software.

According to some embodiments, processor 22 and memory 24 may be included in or may form a part of processing circuitry or control circuitry. In addition, in some embodiments, transceiver 28 may be included in or may form a part of transceiving circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to cause an apparatus (e.g., apparatus 10 and 20) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 20 may be a network element, node, host, or server in a communication network or serving such a network. For example, apparatus 20 may be a satellite, base station, a Node B, an evolved Node B (eNB), 5G Node B or access point, next generation Node B (NG-NB or gNB), and/or WLAN access point, associated with a radio access network (RAN), such as an LTE network, 5G or NR. According to certain embodiments, apparatus 20 may be controlled by memory 24 and processor 22 to perform the functions associated with any of the embodiments described herein.

For instance, in certain example embodiments, apparatus 20 may be controlled by memory 24 and processor 22 to receive a measurement report including an event indication on a target network node. Apparatus 20 may also be controlled by memory 24 and processor 22 to send a handover request message to the target network node for handover of a user equipment. In certain example embodiments, the handover request message may include information including a user equipment operation restriction or a power adjust indication related to the user equipment. Apparatus 20 may further be controlled by memory 24 and processor 22 to receive, in response to the handover request, a handover request acknowledgment message or a handover failure message.

According to other example embodiments, apparatus 20 may be controlled by memory 24 and processor 22 to receive a handover request message from a source network node for handover of a user equipment. According to certain example embodiments, the handover request message may include information including a user equipment operation restriction or a power adjust indication related to the user equipment. Apparatus 20 may also be controlled by memory 24 and processor 22 to decide whether to accept or reject the handover based on the information. Apparatus 20 may further be controlled by memory 24 and processor 22 to send, in response to the handover request, a handover request acknowledgment message or a handover failure message.

Further example embodiments may provide means for performing any of the functions, steps, or procedures described herein. For example one example embodiment may be directed to an apparatus that includes means for detecting an MPE event. The apparatus may also include means for detecting that a target cell or gNB is operating above a certain threshold. In addition, the apparatus may include means for sending a measurement report including an MPE event indication to a source cell or source gNB. According to certain example embodiments, the MPE event indication may include power back-off information, such as an MPE UL power restriction of the UE.

Another example embodiment may be directed to an apparatus that includes means for receiving a measurement report including an event indication on a target network node. The apparatus may also include means for sending a handover request message to the target network node for handover of a user equipment. In certain example embodiments, the handover request message may include information including a user equipment operation restriction or a power adjust indication related to the user equipment. The apparatus may further include means for receiving, in response to the handover request, a handover request acknowledgment message or a handover failure message.

A further example embodiment may be directed to an apparatus that includes means for receiving a handover request message from a source network node for handover of a user equipment. In certain example embodiments, the handover request message may include information including a user equipment operation restriction or a power adjust indication related to the user equipment. The apparatus may also include means for deciding whether to accept or reject the handover based on the information. The apparatus may further include means for sending, in response to the handover request, a handover request acknowledgment message or a handover failure message.

Certain example embodiments described herein provide several technical improvements, enhancements, and /or advantages. In some example embodiments, it may be possible for the target gNB to be aware of the MPE event experienced by the UE (using power back-off), which it can leverage in making better admission control decisions for the UE. In addition, the target gNB may be able to reject the HO request or some of the PDU sessions listed in the HO request, thereby saving time and resources. Moreover, the target gNB may be able to adjust the configuration of the slot format (impacting UL scheduling) pro-actively in the HO command, thereby avoiding any radio communication degradation after completing the HO. According to other example embodiments, it may be possible for the target gNB to adjust the RACH parameters to ensure successful random-access completion.

A computer program product may include one or more computer-executable components which, when the program is run, are configured to carry out some example embodiments. The one or more computer-executable components may be at least one software code or portions of it. Modifications and configurations required for implementing functionality of an example embodiment may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

. Although the above embodiments refer to 5G NR and LTE technology, the above embodiments may also apply to any other present or future 3GPP technology, such as LTE-advanced, and/or fourth generation (4G) technology.

### Partial Glossary

- **DL**: Downlink
- **eNB**: Enhanced Node B
- **FR2**: Frequency Range 2
- **gNB**: 5G or Next Generation NodeB
- **HO**: Handover
- **LTE**: Long Term Evolution
- **MPE**: Maximum Permissible Exposure
- **NR**: New Radio
- **PD**: Power Density
- **[OlOO]PDU**: Protocol Data Unit
- PRACH: Physical Random Access Channel
- PUSCH: Physical Uplink Shared Channel
- **RLF**: Radio Link Failure
- **UE**: User Equipment
- **[OlOS]UL**: Uplink

## Claims

1. A method, comprising:
receiving, at a source network node from a user equipment, UE, a measurement report comprising a maximum permissible exposure, MPE, event indication related to a link between the UE and a target network node;
sending a handover request message to the target network node for handover of a user equipment, wherein the handover request message comprises, based on the MPE event indication, information of at least one of, an MPE information or an uplink power adjustment indication related to the user equipment; and
receiving, in response to the handover request, a handover request acknowledgment message or a handover failure message that takes into account the information.

2. The method according to claim **1,** wherein the user equipment operation restriction is an indication of the MPE event during which the user equipment is required to adjust its output power to satisfy a maximum permissible exposure uplink restriction.

3. The method according to claims **1** or 2, wherein the uplink power adjustment indication is an indication that the user equipment will operate a target link of the target network node under the MPE uplink restriction.

4. The method according to any of claims 1-3, wherein the handover request acknowledgment message comprises a configuration of the target network node that is tailored based on the information.

5. The method according to any of claims 1-4, wherein the handover request acknowledgement message comprises a cause field indicating a rejection of one or more protocol data unit sessions.

6. The method according to any of claims 1-5, further comprising sending a radio resource control reconfiguration message to the user equipment, wherein the radio resource control reconfiguration message comprises a tailored radio access channel configuration based on a content of the handover request acknowledgment message or the handover failure message, the content being related to at least one of the user equipment operation restriction or the uplink power adjustment.

7. The method according to any of claims 1-6, wherein the handover failure message comprises a cause field indicating a rejection of the entire handover.

8. A method, comprising:
receiving, at a target network node, a handover request message from a source network node for handover of a user equipment, wherein the handover request message comprises information of at least one of a maximum permissible exposure, MPE, information or an uplink power adjustment indication related to the user equipment;
deciding whether to accept or reject the handover based on the information; and
sending, in response to the handover request, a handover request acknowledgment message or a handover failure message.

9. The method according to claim 8, further comprising adjusting uplink data scheduling in a communication channel between the target network node and the user equipment based on the information.

10. The method according to claims 8 or 9, further compnsmg configuring a dedicated radio access channel parameter based on the information.

11. The method according to any of claims 8-10, wherein the information corresponds to maximum permissible exposure information of the user equipment.

12. The method according to any of claims 8-11, wherein accepting the handover comprises accepting the handover with one or more protocol data unit sessions, and tailoring a target link configuration of the target network node to the information.

13. The method according to any of claims 8-12, wherein the decision comprises accepting one or more protocol data unit sessions and rejecting one or more protocol data unit sessions.

14. The method according to any of claims 8-13,
wherein the decision to reject the handover is made when a required power back-off of the user equipment results in insufficient uplink power to connect to the target network node, and
wherein the required power back-off is given in the uplink power adjustment.

15. An apparatus comprising means for performing the method of any of claims 1 to 7, when operating as source network node or 8 to 14 when operating as target network node.

## Patentansprüche

1. Verfahren, das Folgendes umfasst:
Empfangen eines Messberichts, der eine Ereignisanzeige für eine maximal zulässige Exposition, MPE, umfasst, die sich auf einen Link zwischen einer UE und einem Zielnetzwerkknoten bezieht, an einem Quellnetzwerkknoten von einer Teilnehmereinrichtung, UE;
Senden einer Übergabeanforderungsnachricht an den Zielnetzwerkknoten für eine Übergabe einer Teilnehmereinrichtung, wobei die Übergabeanforderungsnachricht auf Basis der MPEG-Ereignisanzeige Informationen über mindestens eines von MPE-Informationen oder einer Uplinkleistungsanpassungsanzeige, die sich auf die Teilnehmereinrichtung bezieht, umfasst; und
Empfangen in Reaktion auf die Übergabeanforderung einer Übergabeanforderungsbestätigungsnachricht oder einer Übergabefehlernachricht, die die Informationen berücksichtigt.

2. Verfahren nach Anspruch 1, wobei die Teilnehmereinrichtungsbetriebseinschränkung eine Anzeige des MPE-Ereignisses ist, während dem angefordert wird, dass die Teilnehmereinrichtung ihre Ausgangsleistung anpasst, um eine Uplinkeinschränkung für eine maximal zulässige Exposition zu erfüllen.

3. Verfahren nach Anspruch 1 oder 2, wobei die Uplinkleistungsanpassungsanzeige eine Anzeige ist, dass die Teilnehmereinrichtung unter der MPE-Uplinkeinschränkung einen Ziellink des Zielnetzwerkknotens betreiben wird.

4. Verfahren nach einem der Ansprüche 1-3, wobei die Übergabeanforderungsbestätigungsnachricht eine Auslegung des Zielnetzwerkknotens umfasst, die auf Basis der Informationen zugeschnitten ist.

5. Verfahren nach einem der Ansprüche 1-4, wobei die Übergabeanforderungsbestätigungsnachricht ein Ursachenfeld umfasst, das eine Zurückweisung von einer oder mehreren Protokolldateneinheitssitzungen anzeigt.

6. Verfahren nach einem der Ansprüche 1-5, das ferner das Senden einer Funkressourcensteuerungsneuauslegungsnachricht an die Teilnehmereinrichtung umfasst, wobei die Funkressourcensteuerungsneuauslegungsnachricht eine zugeschnittene Funkzugangskanalauslegung auf Basis eines Inhalts der Übergabeanforderungsbestätigungsnachricht oder der Übergabefehlernachricht umfasst, wobei sich der Inhalt mindestens auf eines der Teilnehmereinrichtungsbetriebseinschränkung oder der Uplinkleistungsanpassung bezieht.

7. Verfahren nach einem der Ansprüche 1-6, wobei die Übergabefehlernachricht ein Ursachenfeld umfasst, das eine Zurückweisung der gesamten Übergabe anzeigt.

8. Verfahren, das Folgendes umfasst:
Empfangen einer Übergabeanforderungsnachricht an einem Zielnetzwerkknoten von einem Quellnetzwerkknoten für eine Übergabe einer Teilnehmereinrichtung, wobei die Übergabeanforderungsnachricht Informationen über mindestens eines von Informationen über eine maximal zulässige Exposition, MPE, oder einer Uplinkleistungsanpassungsanzeige umfasst, die sich auf die Teilnehmereinrichtung bezieht;
Beschließen, ob die Übergabe auf Basis der Informationen akzeptiert oder zurückgewiesen werden soll; und
Senden einer Übergabeanforderungsbestätigungsnachricht oder einer Übergabefehlernachricht in Reaktion auf die Übergabeanforderung.

9. Verfahren nach Anspruch 8, das ferner eine Uplinkdatenanpassungsplanung in einem Kommunikationskanal zwischen dem Zielnetzwerkknoten und der Teilnehmereinrichtung auf Basis der Informationen umfasst.

10. Verfahren nach Anspruch 8 oder 9, das ferner das Auslegen eines dedizierten Funkzugangskanalparameters auf Basis der Informationen umfasst.

11. Verfahren nach einem der Ansprüche 8-10, wobei die Informationen Informationen der Teilnehmereinrichtung zu einer maximal zulässigen Exposition entsprechen.

12. Verfahren nach einem der Ansprüche 8-11, wobei das Akzeptieren der Übergabe das Akzeptieren der Übergabe mit einer oder mehreren Protokolldateneinheitssitzungen und das Zuschneiden einer Ziellinkauslegung des Zielnetzwerkknotens auf die Informationen umfasst.

13. Verfahren nach einem der Ansprüche 8-12, wobei der Beschluss das Akzeptieren von einer oder mehreren Protokolldateneinheitssitzungen und das Zurückweisen von einer oder mehreren Protokolldateneinheitssitzungen umfasst.

14. Verfahren nach einem der Ansprüche 8-13,
wobei der Beschluss, die Übergabe zurückzuweisen, getroffen wird, wenn ein angeforderter Leistungsbackoff der Teilnehmereinrichtung in einer unzureichenden Uplinkleistung zum Verbinden mit dem Zielnetzwerkknoten resultiert, und
wobei der angeforderte Leistungsbackoff in der Uplinkleistungsanpassung angegeben ist.

15. Einrichtung, die Mittel zum Durchführen des Verfahrens nach einem der Ansprüche 1 bis 7 umfasst, wenn sie als ein Quellnetzwerkknoten betrieben wird, oder 8 bis 14, wenn sie als ein Zielnetzwerkknoten betrieben wird.

## Revendications

1. Procédé comprenant les étapes suivantes :
recevoir d'un équipement utilisateur UE, au niveau d'un nœud de réseau source, un rapport de mesure comprenant une indication d'événement d'exposition maximale admissible, MPE, liée à une liaison entre l'UE et un nœud de réseau cible ;
envoyer un message de demande de transfert intercellulaire au nœud de réseau cible pour le transfert intercellulaire d'un équipement utilisateur, dans lequel le message de demande de transfert intercellulaire comprend, sur la base de l'indication d'événement MPE, des informations consistant en des informations MPE et/ou une indication d'ajustement de puissance de liaison montante liée à l'équipement utilisateur ; et
en réponse à la demande de transfert intercellulaire, recevoir un message d'accusé de réception de demande de transfert intercellulaire ou un message d'échec de transfert intercellulaire qui prend en compte les informations.

2. Procédé selon la revendication 1, dans lequel la restriction de fonctionnement d'équipement utilisateur est une indication de l'événement MPE pendant lequel l'équipement utilisateur doit ajuster sa puissance de sortie pour respecter une restriction de liaison montante d'exposition maximale admissible.

3. Procédé selon les revendications 1 ou 2, dans lequel l'indication d'ajustement de puissance de liaison montante est une indication précisant que l'équipement utilisateur fonctionnera sur une liaison cible du nœud de réseau cible sous la restriction de liaison montante MPE.

4. Procédé selon l'une des revendications 1 à 3, dans lequel le message d'accusé de réception de demande de transfert intercellulaire comprend une configuration du nœud de réseau cible qui est adaptée sur la base des informations.

5. Procédé selon l'une des revendications 1 à 4, dans lequel le message d'accusé de réception de demande de transfert intercellulaire comprend un champ de cause indiquant un rejet d'une ou plusieurs sessions d'unité de données de protocole.

6. Procédé selon l'une des revendications 1 à 5, comprenant en outre l'envoi d'un message de reconfiguration de contrôle de ressources radio à l'équipement utilisateur, dans lequel le message de reconfiguration de contrôle de ressources radio comprend une configuration de canal d'accès radio adaptée sur la base d'un contenu du message d'accusé de réception de demande de transfert intercellulaire ou du message d'échec de transfert intercellulaire, le contenu étant lié à la restriction de fonctionnement d'équipement utilisateur et/ou à l'ajustement de puissance de liaison montante.

7. Procédé selon l'une des revendications 1 à 6, dans lequel le message d'échec de transfert intercellulaire comprend un champ de cause indiquant un rejet de la totalité du transfert intercellulaire.

8. Procédé comprenant les étapes suivantes :
recevoir d'un nœud de réseau source, au niveau d'un nœud de réseau cible, un message de demande de transfert intercellulaire pour le transfert intercellulaire d'un équipement utilisateur, dans lequel le message de demande de transfert intercellulaire comprend des informations consistant en des informations d'exposition maximale admissible, MPE, et/ou une indication d'ajustement de puissance de liaison montante liée à l'équipement utilisateur ;
décider s'il faut accepter ou refuser le transfert intercellulaire sur la base des informations ; et
en réponse à la demande de transfert intercellulaire, envoyer un message d'accusé de réception de demande de transfert intercellulaire ou un message d'échec de transfert intercellulaire.

9. Procédé selon la revendication 8, comprenant en outre l'ajustement de la planification de données de liaison montante dans un canal de communication entre le nœud de réseau cible et l'équipement utilisateur sur la base des informations.

10. Procédé selon les revendications 8 ou 9, comprenant en outre la configuration d'un paramètre de canal d'accès radio dédié sur la base des informations.

11. Procédé selon l'une des revendications 8 à 10, dans lequel les informations correspondent à des informations d'exposition maximale admissible de l'équipement utilisateur.

12. Procédé selon l'une des revendications 8 à 11, dans lequel l'acceptation du transfert intercellulaire comprend l'acceptation du transfert intercellulaire avec une ou plusieurs sessions d'unité de données de protocole, et l'adaptation d'une configuration de liaison cible du nœud de réseau cible aux informations.

13. Procédé selon l'une des revendications 8 à 12, dans lequel la décision comprend l'acceptation d'une ou plusieurs sessions d'unité de données de protocole et le rejet d'une ou plusieurs sessions d'unité de données de protocole.

14. Procédé selon l'une des revendications 8 à 13,
dans lequel la décision de rejeter le transfert intercellulaire est prise lorsqu'un recul de puissance requis de l'équipement utilisateur entraîne une puissance de liaison montante insuffisante pour se connecter au nœud de réseau cible, et
dans lequel le recul de puissance requis est fourni dans l'ajustement de puissance de liaison montante.

15. Appareil comprenant des moyens pour réaliser le procédé selon l'une des revendications 1 à 7, lorsqu'il fonctionne en tant que nœud de réseau source, selon l'une des revendications 8 à 14 lorsqu'il fonctionne en tant que nœud de réseau cible.
